# EUROPEAN PATENT APPLICATION

(11) **EP 2 796 515 A1**
(43) Date of publication of application: **29.10.2014**
(21) Application number: 13165456.8
(22) Date of filing: 25.04.2013
(51) Int. Cl.: C09D 5/00

(54) **Coating composition for walls and floors and method for its application**

(71) Applicant: Materia Applicata srl, 00197 Roma (IT)
(72) Inventor: Geroni, Gianluigi, 00191 Roma (IT)
(74) Representative: Cardelli, Guido

(57) **Abstract**

A coating composition for walls and floors comprises a matrix of two-component epoxy resin in aqueous dispersion and a filler of ceramic material consisting of grog that is a powder obtained by grinding and sieving ceramic scraps.

A method of application of this coating composition on a substrate, which is performed with a spatula layer by layer after the previous layer is dried and sanded, is also described.

## Description

The present invention relates to a coating composition for walls and floors and a method for its application.

Processes of forming resinous coatings that include the mixing of a two-component resin with a filler of ceramic material are known. However, until now ceramic substances have been used generally in the form of minerals such as quartz, kaolin, clay, feldspar and metal oxides. This has resulted in an inhomogeneous final product since the ceramic components acquire the typical characteristics after firing, and therefore the minerals do not give the desired results when used directly as a filler in a resinous coating. In the past a powder, known as "chamotte" or "grog" or "firesand", obtained by grinding and sieving ceramic scraps, has been added to compositions for obtaining successive ceramic products resistant to sudden changes of heat. For example in Japanese Raku technique, according to which a workpiece undergoes a strong thermal shock when fired, it is necessary to use a robust and refractory clay with grog inside in order to decrease the degree of contraction, thereby avoiding the likelihood of fracture. This feature of stability is at the base of the coating composition for walls and floors according to the present invention that is achieved thanks to an intuition that the combination of a resin matrix with grog could give a coating product valid features that other covering products existing on the market do not have.

The invention is also inspired by reusing materials that are difficult to be recycled otherwise, such as ceramic materials of which sanitary ware, tiles, pottery and the like are made.

In a first aspect, an object of the present invention is to provide a wall and floor coating composition able to make treated surfaces resistant to heat, abrasion, chemicals and corrosion.

Further, an object of the present invention is to propose a wall and floor coating composition that confers continuity and seal features to the surfaces to which it is applied.

Another object is to provide a wall and floor coating composition that has a pleasant appearance and therefore does not require further treatments such as painting and enamelling.

In a second aspect of the present invention, an object is to provide a method of applying a coating composition on a substrate such as a wall or a floor.

The technical task mentioned and the objects specified are substantially achieved by a wall and floor coating composition and a method for its application, comprising the technical characteristics exposed in the appended claims.

Further features and advantages of the present invention will become more apparent from the following indicative, and therefore not limiting description.

The wall and floor coating composition according to the invention comprises a matrix of two-component epoxy resin in an aqueous dispersion, acting as a binder, and a filler of ceramic material consists of "chamotte" or "grog" that is a powder obtained by grinding and sieving ceramic scraps.

The matrix of two-component resin comprises epoxy resin in an aqueous dispersion and its polyamine adduct as a hardener, which is also dissolved in water. Preferably, IPM Deco Mastic of IPM Italy, Sulbiate (MI), is used. The proportion of epoxy resin to polyamine adduct is about 4 to 1.

The grog is in the form of particles having a diameter of 0.01 to 0.9 mm. The weight ratio of grog as a filler with respect to the matrix of two-component resin varies depending on the application layers.

The method of application of the coating according to the present invention provides the application with a spatula layer by layer after the previous layer is dried. The ratio of the filler with respect to the matrix varies from one layer to another in a range of 5 to 2.3 parts of one with respect to the other, decreasing with the progress of the layers. Similarly, layer after layer, particles of grog having decreasing diameter are used.

In the following an example of application of the coating according to the invention is given.

On any substrate, for example a floor of concrete, a layer of primer is preferably given adapted to create an adhesion between the substrate and a first coating layer, which is prepared by adding a hardener to the mixture of a monomer adapted to create a epoxy resin to the water, and grog. The mixing and application occur at a temperature between 11°C and 30°C, and the first layer, which is spread with a spatula, impregnates a sheet of fibre glass adapted to reinforce it. The diameter of the filler particles is preferably around 0.9 mm and the ratio of filler to matrix is maximum, being preferably 5.

After waiting for 18-24 hours for drying, a second coating layer being preferably identical to the first one is spread with a spatula, after sanding.

One proceeds in the same way for a third, fourth, fifth and sixth layer, charged particles of filler with a diameter of 0.01 - 0.02 mm and lower ratios between filler and matrix between 2.3 and 2.5 being used in the sixth layer.

A seventh and last layer is applied after adding the charge of glass microspheres in a variable amount depending on a desired aesthetic effect of gloss.

Finally a waterborne polyurethane wax is passed as a treatment of surface finish, with waterproof and stain resistant features.

Modifications and variations of the present invention are possible in the spirit of the appended claims.

## Claims

1. A coating composition for walls and floors comprising a matrix of two-component epoxy resin in aqueous dispersion and a filler of ceramic material, **characterised in that** the filler of the ceramic material consists of grog that is a powder obtained by grinding and sieving ceramic scraps.

2. A composition according to claim 1, **characterised in that** said matrix of two-component epoxy resin comprises an epoxy resin in an aqueous dispersion and its polyamine adduct as a hardener which is also dissolved in water.

3. A composition according to claim 1, **characterised in that** the grog is in the form of particles having a diameter from 0.01 to 0.9 mm.

4. A method of applying a coating composition on a substrate such as a wall or a floor comprising a composite with a matrix of two-component epoxy resin in aqueous dispersion and a filler of ceramic material consisting of grog, **characterised by** comprising the application of said coating composition with a spatula layer by layer after the previous layer is dried and sanded.

5. The method according to claim 4, **characterised by** comprising a first step of applying a primer on said substrate, a second step of applying a first layer of said coating composition and a third step of applying a sheet of glass fibre at least on said first layer of said coating composition.

6. The method according to claim 4, **characterised in that** the weight ratio between the filler and the matrix varies, from one layer to another, by 5 parts to 2.3 parts of filler for each part of matrix, said weight ratio decreasing in a layer after the other.

7. The method according to claim 4, **characterised in that** the composition used has filler particles with a diameter decreasing layer after layer.
